# EUROPEAN PATENT APPLICATION

(11) **EP 4 787 588 A1**
(43) Date of publication of application: **05.08.2026**
(21) Application number: 24869579.3
(22) Date of filing: 06.02.2024
(51) Int. Cl.: H01M 50/358, H01M 50/342, H01M 50/325

(54) **BATTERY CASE, BATTERY PACK, AND VEHICLE**

(30) Priority: 28.09.2023 CN 202322670780 U
(71) Applicant: BYD Company Limited, Shenzhen, Guangdong 518118 (CN)
(72) Inventor: ZHANG, Chengjun, Shenzhen, Guangdong 518118 (CN); LI, Fangpei, Shenzhen, Guangdong 518118 (CN); HUANG, Fei, Shenzhen, Guangdong 518118 (CN); ZHANG, Zhonglin, Shenzhen, Guangdong 518118 (CN); GONG, Xubin, Shenzhen, Guangdong 518118 (CN)
(74) Representative: Taor, Simon Edward William
(86) International application number: PCT/CN2024/076216
(87) International publication number: WO 2025/066007

(57) **Abstract**

This application discloses a vehicle with a battery pack. The battery pack has a battery box. The battery box includes a first side beam and a baffle plate. A first chamber is disposed inside the first side beam, a side that is of the first side beam and that faces an inner side of the battery box forms a first chamber wall of the first chamber, the first chamber wall has a first communication hole running through the first chamber wall in a thickness direction, and a first venting hole is further disposed on the first side beam, so that the first chamber is in communication with an outer side of the first side beam. The baffle plate is disposed at a venting opening of the battery box, and encloses a venting space together with an inner wall of the battery box. The first venting hole and the venting opening are separately in communication with the venting space.

## Description

### CROSS-REFERENCE TO RELATED APPLICATIONS

This application claims priority to Chinese Patent Application No. 202322670780.8 filed on September 28, 2023, and entitled "BATTERY BOX, BATTERY PACK, AND VEHICLE", which is incorporated herein by reference in its entirety for all purposes.

### TECHNICAL FIELD

This application relates to the field of batteries, and more specifically, to a battery box, a battery pack, and a vehicle.

### BACKGROUND

With the transition to green energy, electric vehicles have gradually become a mainstream trend due to clean energy characteristics thereof. Batteries are key components of the electric vehicles, and safety thereof has become a major concern for users. In an extreme state of a battery, an explosion-proof valve of a cell may be opened, causing the cell to release a high-temperature electrolyte-laden gas. This gas causes thermal runaway and thermal safety problems in surrounding cells and a battery pack, potentially leading to extreme cases such as battery explosion. In a current disposition manner of a venting channel in a battery pack, a high-temperature electrolyte-laden gas released by a specific cell in an extreme state needs to be vented out of the battery pack after diffusing for a long distance in the battery pack, resulting in a poor gas recovery effect, and high thermal runaway and thermal safety risks.

### SUMMARY

This application is provided to resolve at least one of the foregoing problems. According to a first aspect of this application, a battery box is provided. The battery box is configured to accommodate a battery. The battery box includes a first side beam and a baffle plate. A first chamber is disposed inside the first side beam, a side that is of the first side beam and that faces an inner side of the battery box forms a first chamber wall of the first chamber, the first chamber wall has a first communication hole running through the first chamber wall in a thickness direction, and a first venting hole is further disposed on the first side beam, so that the first chamber is in communication with an outer side of the first side beam. The baffle plate is disposed at a venting opening of the battery box, and encloses a venting space together with an inner wall of the battery box. The first venting hole and the venting opening are separately in communication with the venting space.

In an embodiment of this application, the battery box includes two first side beams spaced apart, and the battery is configured to be accommodated between the two first side beams.

In an embodiment of this application, the battery box further includes a second side beam, disposed between the two first side beams, and configured to define two battery accommodating chambers.

In an embodiment of this application, a second chamber is disposed inside the second side beam, two sides that are of the second side beam and that respectively face the two first side beams respectively form a second chamber wall and a third chamber wall of the second chamber, the second chamber wall has a second communication hole running through the second chamber wall in a thickness direction, and the third chamber wall has a third communication hole running through the third chamber wall in a thickness direction. The battery box further includes a front horizontal beam connected between the first side beams and the second side beam, a third chamber is disposed inside the front horizontal beam, the third chamber is in communication with one sub-chamber of the second chamber through a second venting hole, the third chamber is further in communication with another sub-chamber of the second chamber through a third venting hole, and a fourth venting hole is further disposed on the front horizontal beam, so that the third chamber is in communication with an outer side of the front horizontal beam, and the fourth venting hole is in communication with the venting space.

In an embodiment of this application, the second chamber includes at least two sub-chambers, and the second communication hole and the third communication hole are respectively in communication with different sub-chambers in the at least two sub-chambers.

In an embodiment of this application, the at least two sub-chambers are arranged in a height direction.

In an embodiment of this application, the front horizontal beam is configured to isolate a battery accommodating chamber from a power distribution chamber; the first venting hole is disposed on the first chamber wall and faces the power distribution chamber; and a side that is of the front horizontal beam and that faces the power distribution chamber forms a fourth chamber wall of the third chamber, and the fourth venting hole runs through the fourth chamber wall in a thickness direction.

In an embodiment of this application, the baffle plate includes a first plate and a second plate connected to the first plate; the first plate is connected to the fourth chamber wall and a bottom plate of the battery box, and is disposed opposite to the first side beam, and the fourth venting hole, the first venting hole, and the venting opening are located on a same side of the first plate; and the second plate is connected to the first side beam and the fourth chamber wall, and is disposed opposite to the bottom plate, and the first venting hole, the fourth venting hole, and the venting opening are all located between the second plate and the bottom plate.

In an embodiment of this application, the battery box further includes a front horizontal beam, connected between the two first side beams, and configured to isolate a battery accommodating chamber from a power distribution chamber; and the first venting hole is disposed on the first chamber wall and faces the power distribution chamber.

In an embodiment of this application, the baffle plate includes a first plate and a second plate connected to the first plate; the first plate is connected to the front horizontal beam and a bottom plate of the battery box, and is disposed opposite to the first side beam, and the first venting hole and the venting opening are located on a same side of the first plate; and the second plate is connected to the first side beam and the front horizontal beam, and is disposed opposite to the bottom plate, and the first venting hole and the venting opening are both located between the second plate and the bottom plate.

In an embodiment of this application, the venting opening is disposed on the first side beam, and is not in communication with the first chamber in the first side beam.

In an embodiment of this application, the baffle plate further includes a third plate, opposite to the front horizontal beam and connected between the bottom plate and the second plate; and the third plate is further connected between the first side beam and the first plate, to enclose the venting space together with the first plate, the second plate, and the inner wall of the battery box.

In an embodiment of this application, the baffle plate includes a first plate and a second plate connected to the first plate; and the first plate is connected to the first side beam and a bottom plate of the battery box, the second plate is connected to the first side beam and is disposed opposite to the bottom plate, and the first plate, the second plate, and the inner wall of the battery box enclose the venting space.

In an embodiment of this application, the venting opening is opposite to the first plate.

In an embodiment of this application, a gas inlet is disposed at a position that is on the baffle plate and that is opposite to the bottom plate of the battery box.

In an embodiment of this application, a gas inlet channel is disposed at the gas inlet, and the gas inlet channel is located in the venting space.

In an embodiment of this application, the gas inlet is disposed on the second plate.

In an embodiment of this application, a battery explosion-proof valve is disposed at the venting opening.

In an embodiment of this application, the battery box further includes a cold plate, fastened to the first side beam and disposed opposite to the bottom plate of the battery box.

According to a second aspect of this application, a battery pack is provided. The battery pack includes any battery box mentioned above and a battery accommodated in the battery box.

In an embodiment of this application, the battery has a battery explosion-proof valve facing the first side beam.

According to a third aspect of this application, a vehicle is provided. The vehicle includes a vehicle body and any battery pack mentioned above that is disposed on the vehicle body.

According to the battery box, the battery pack, and the vehicle provided in the embodiments of this application, the first chamber is disposed inside the first side beam, the first chamber wall of the first chamber has the first communication hole running through the first chamber wall in the thickness direction, and the first venting hole is further disposed on the first side beam, so that the first chamber is in communication with the outer side of the first side beam. In addition, the venting opening is disposed on the battery box, the baffle plate is disposed at the venting opening, the baffle plate is disposed on the venting opening and encloses the venting space together with the inner wall of the battery box, and the first venting hole and the venting opening are separately in communication with the venting space, so that a gas generated by a cell can be directly vented into the first chamber and vented outward through the first chamber. In addition, the baffle plate is disposed to prevent the gas vented from the first chamber from jetting into the power distribution chamber, thereby improving a gas recovery effect, and reducing thermal runaway and thermal safety risks of the battery pack.

### BRIEF DESCRIPTION OF DRAWINGS

To describe the technical solutions in the embodiments of this application more clearly, the following briefly describes the accompanying drawings required for the descriptions in the embodiments. Clearly, the accompanying drawings in the following descriptions merely show some embodiments of this application, and a person of ordinary skill in the art may still obtain other accompanying drawings from these accompanying drawings without creative efforts.
FIG. 1 is a schematic diagram of an exploded structure of a battery pack according to an embodiment of this application;
FIG. 2 is a schematic top view of a venting direction according to an embodiment of this application;
FIG. 3 is a schematic diagram of a structure of a first side beam according to an embodiment of this application;
FIG. 4 is a schematic diagram of a structure of a second side beam according to an embodiment of this application;
FIG. 5 is a schematic diagram of a structure of a front horizontal beam viewed from an angle according to an embodiment of this application;
FIG. 6 is a schematic diagram of a structure of a front horizontal beam viewed from another angle according to an embodiment of this application;
FIG. 7 is a schematic cross-sectional view of a local part of a battery pack according to an embodiment of this application;
FIG. 8 is a schematic enlarged view of a part H in FIG. 7;
FIG. 9 is a top view of a partial structure according to an embodiment of this application; and
FIG. 10 is a schematic enlarged view of a part K in FIG. 9.

### Reference numerals:

10-bottom plate; 11-first side beam; 111-first chamber; 112-first chamber wall;
113-first communication hole; 114-first venting hole; 12-second side beam; 121-second chamber;
122-second chamber wall; 123-third chamber wall; 124-second communication hole; 125-third communication hole;
13-front horizontal beam; 131-third chamber; 132-second venting hole; 133-third venting hole;
134-fourth venting hole; 135-fourth chamber wall; 14-rear horizontal beam; 20-venting opening; 21-power distribution chamber;
30-baffle plate; 301-gas inlet; 31-first plate; 32-second plate; 33-third plate;
34-fourth plate; 35-fifth plate; 40-battery; 41-battery explosion-proof valve; and 50-cold plate.

### DESCRIPTION OF EMBODIMENTS

To make the objectives, technical solutions, and advantages of this application more apparent, example embodiments according to this application are described below in detail with reference to the accompanying drawings. Apparently, the described embodiments are only some embodiments rather than all embodiments of this application. It should be understood that this application is not limited to the example embodiments described herein. Based on the embodiments of this application described in this application, all other embodiments obtained by a person skilled in the art without making creative efforts fall within the protection scope of this application.

In the following description, a large quantity of specific details are provided to provide a more thorough understanding of this application. However, for a person skilled in the art, it is clear that this application can be implemented without one or more of these details. In another example, to avoid confusion with this application, some technical features well-known in the art are not described.

It should be understood that this application can be implemented in different forms and should not be construed as limiting to the embodiments provided herein. Contrarily, providing these embodiments renders the disclosure thorough and complete, and fully conveys the scope of this application to a person skilled in the art.

For a thorough understanding of this application, detailed structures are provided in the following descriptions to illustrate the technical solutions provided in this application. An optional embodiment of this application is described in detail below. However, in addition to these detailed descriptions, this application may have another implementation.

Some implementations of this application are described in detail below with reference to the accompanying drawings. In absence of conflicts, the following embodiments and the features in the embodiments may be mutually combined.

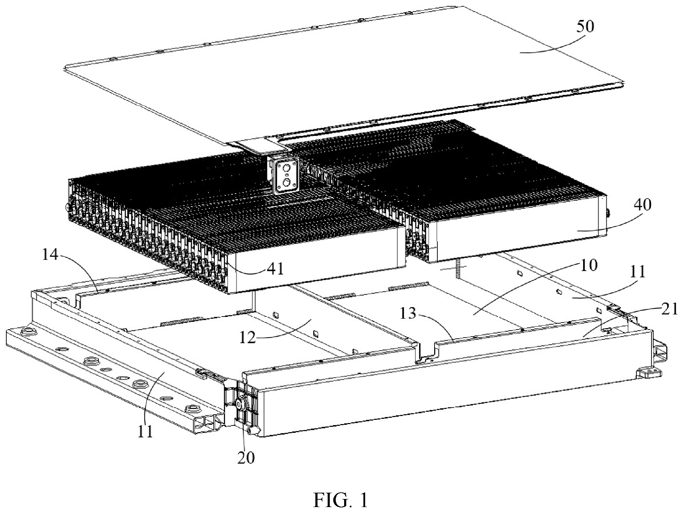

An embodiment of this application provides a battery box. Referring to FIG. 1, FIG. 2, and FIG. 3, the battery box is configured to accommodate a battery 40. The battery box includes a first side beam 11 and a baffle plate 30. A first chamber 111 is disposed inside the first side beam 11, a side that is of the first side beam 11 and that faces an inner side of the battery box forms a first chamber wall 112 of the first chamber 111, the first chamber wall 112 has a first communication hole 113 running through the first chamber wall 112 in a thickness direction, and a first venting hole 114 is further disposed on the first side beam 11, so that the first chamber 111 is in communication with an outer side of the first side beam 11. The baffle plate 30 is disposed at a venting opening 20 of the battery box, and encloses a venting space together with an inner wall of the battery box. The first venting hole 114 and the venting opening 20 are separately in communication with the venting space.

In the foregoing solution, the first chamber 111 is disposed inside the first side beam 11, the first chamber wall 112 of the first chamber 111 has the first communication hole 113 running through the first chamber wall 112 in the thickness direction, and the first venting hole 114 is further disposed on the first side beam 11, so that the first chamber 111 is in communication with the outer side of the first side beam 11. In addition, the venting opening 20 is disposed on the battery box, the baffle plate 30 is disposed at the venting opening 20, the baffle plate 30 is disposed on the venting opening 20 and encloses the venting space together with the inner wall of the battery box, and the first venting hole 114 and the venting opening 20 are separately in communication with the venting space, so that a gas generated by a cell can be directly vented into the first chamber 111 and vented outward through the first chamber 111. In addition, the baffle plate 30 is disposed to prevent the gas vented from the first chamber 111 from jetting into a power distribution chamber 21, thereby improving a gas recovery effect, and reducing thermal runaway and thermal safety risks of a battery pack. The foregoing structures are described in detail below with reference to the accompanying drawings.

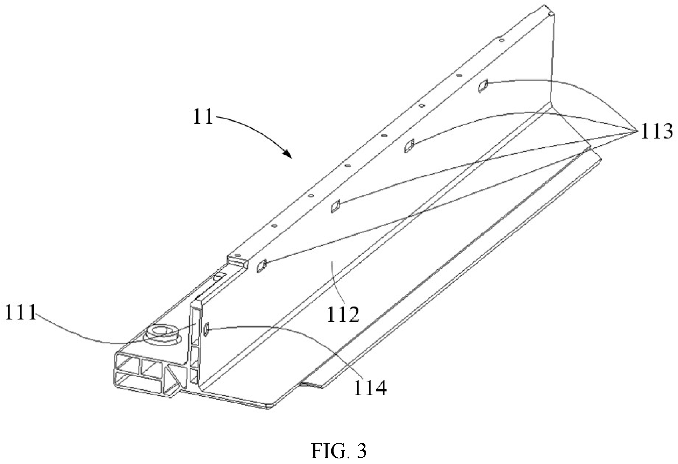

When the first side beam 11 is disposed, referring to FIG. 3, the first chamber 111 is disposed inside the first side beam 11, an inner side that is of the first side beam 11 and that faces the battery box forms the first chamber wall 112 of the first chamber 111, and the first chamber wall 112 has the first communication hole 113 running through the first chamber wall 112 in the thickness direction, so that a gas jetted from the battery 40 can enter the first chamber 111 through the first communication hole 113. The first venting hole 114 is further disposed on the first side beam 11, and the first venting hole 114 is in communication with the first chamber 111, so that the first chamber 111 can be in communication with the outer side of the first side beam 11, to vent the gas in the first chamber 111 out of the first chamber 111 through the first venting hole 114. That is, there is a hollow chamber structure inside the first side beam 11.

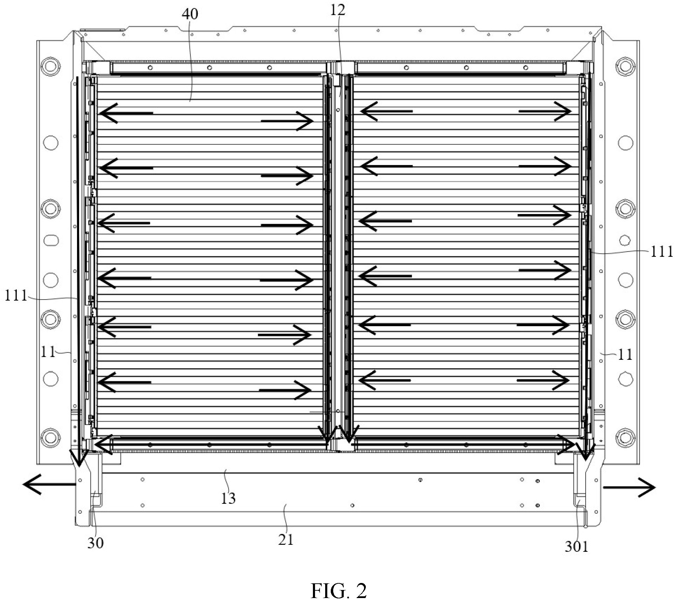

When a quantity of the foregoing first side beams 11 is determined, one first side beam 11 may be disposed on the battery box. In some embodiments, referring to FIG. 1 and FIG. 2, there may be two first side beams 11, and the two first side beams 11 are spaced from each other to form a space for accommodating the battery 40. The battery 40 is accommodated between the two first side beams 11. In this case, the first communication holes 113 on the two first side beams 11 may be opposite to each other, that is, the first communication hole 113 on one of the first side beams 11 faces that on the other first side beam 11. In some embodiments, the first venting holes 114 on the two first side beams 11 may be further opposite to each other, that is, the first venting hole 114 on one of the first side beams 11 faces that on the other first side beam 11.

In some embodiments, referring to FIG. 1, the battery box may further include a bottom plate 10. The bottom plate 10 is configured to bear and support the battery 40. Any type of plate structure may be used as the bottom plate 10 when the bottom plate 10 is disposed. The first side beam 11 may be disposed on the bottom plate 10. Specifically, the first side beam 11 may be disposed on one side of the bottom plate 10. When the battery box includes two first side beams 11, referring to FIG. 1, FIG. 2, and FIG. 3, both the two first side beams 11 may be disposed on the bottom plate 10 and spaced from each other, to provide the space for disposing the battery 40 between the two first side beams 11. In some embodiments, the first side beam 11 and the bottom plate 10 may be of an integrated structure, that is, the first side beam 11 is integrally machined together with the bottom plate 10, so that the first side beam 11 forms a raised beam structure on an edge of the bottom plate 10, thereby connecting the first side beam 11 to the bottom plate 10. In some other embodiments, the first side beam 11 and the bottom plate 10 may be separately machined, and then the first side beam 11 is connected to the bottom plate 10 in a manner such as but not limited to bolt connection and engagement.

Referring to FIG. 1, FIG. 2, FIG. 9, and FIG. 10, the venting opening 20 is further disposed on the battery box, the baffle plate 30 is disposed at the venting opening 20, the baffle plate 30 is disposed on the first venting hole 114 and the venting opening 20, the baffle plate 30 encloses the venting space together with the inner wall of the battery box, and both the first venting hole 114 and the venting opening 20 are in communication with the venting space. For example, both the first venting hole 114 and the venting opening 20 are located in the venting space to separate the first venting hole 114 and the venting opening 20 from another structure inside the battery pack, thereby preventing the gas at the first venting hole 114 and the venting opening 20 from entering another position of the battery pack, and enabling the gas vented through the first venting hole 114 to be vented outward from the venting opening 20 more quickly.

For example, referring to FIG. 1, FIG. 2, and FIG. 4, the battery box may further include a second side beam 12. The second side beam 12 may be disposed between the two first side beams 11, that is, the second side beam 12 separates the space enclosed by the two first side beams 11 into two independent spaces to form two battery accommodating chambers to respectively accommodate batteries 40. The second side beam 12 can prevent the gas in the battery accommodating chamber from diffusing to another chamber, and avoid interference between the batteries 40 on two sides of the second side beam 12. In some embodiments, the second side beam 12 may be disposed on the bottom plate 10. In some embodiments, the second side beam 12 and the bottom plate 10 may be of an integrated structure, that is, the second side beam 12 is integrally machined together with the bottom plate 10, so that the second side beam 12 forms a raised beam structure in the middle of the bottom plate 10, thereby connecting the second side beam 12 to the bottom plate 10. In some other embodiments, the second side beam 12 and the bottom plate 10 may be separately machined, and then the second side beam 12 is connected to the bottom plate 10 in a manner such as but not limited to bolt connection and engagement.

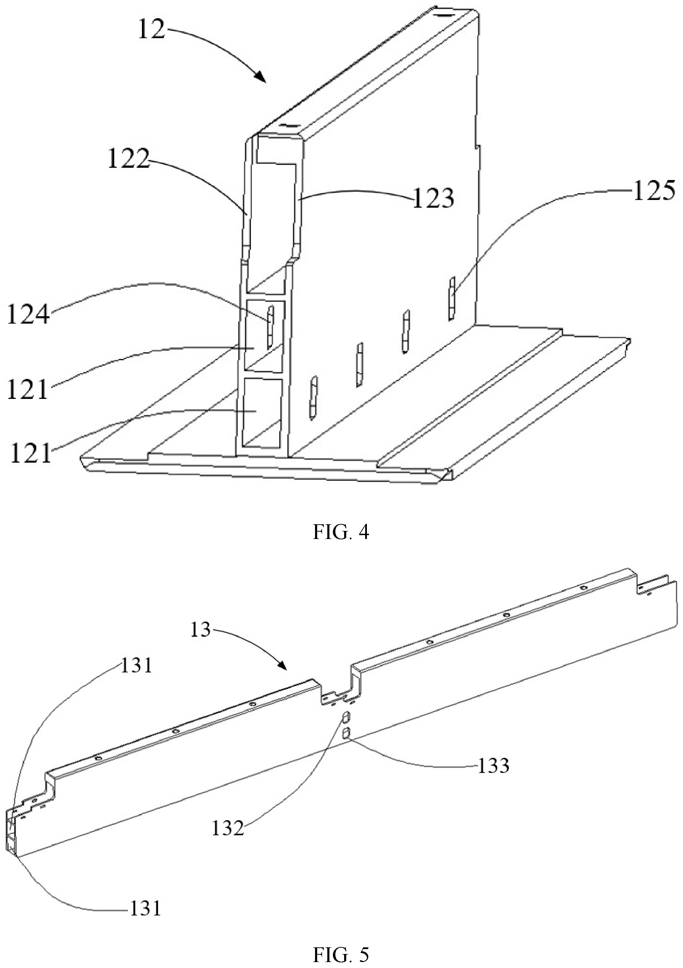

In some embodiments, referring to FIG. 4, a second chamber 121 may be disposed inside the second side beam 12, and two sides that are of the second side beam 12 and that respectively face the two first side beams 11 respectively from a second chamber wall 122 and a third chamber wall 123 of the second chamber 121. That is, the second chamber wall 122 of the second chamber 121 faces one of the two first side beams 11, and the third chamber wall 123 of the second chamber 121 faces the other side beam of the two first side beams 11. For example, the second chamber wall 122 may have a second communication hole 124 running through the second chamber wall 122 in a thickness direction, so that the gas vented from the battery 40 on the side of the second chamber wall 122 enters the second chamber 121 through the second communication hole 124. Further, the third chamber wall 123 may have a third communication hole 125 running through the third chamber wall 123 in a thickness direction, so that the gas vented from the battery 40 on the side of the third chamber wall 123 enters the second chamber 121 through the third communication hole 125, thereby preventing the gas vented from the battery 40 from diffusing inside the battery pack.

In some embodiments, referring to FIG. 4, the second chamber 121 may include at least two sub-chambers, and different sub-chambers are separated from each other, and the second communication hole 124 and the third communication hole 125 are respectively in communication with different sub-chambers in the at least two sub-chambers, so that gases vented from cells on different sides of the second side beam 12 enter different sub-chambers of the second chamber 121, thereby avoiding a counter-jetting phenomenon. The second chamber 121 may include two, three, four, or more sub-chambers.

For example, referring to FIG. 4, the at least two sub-chambers are arranged in a height direction, so that the at least two sub-chambers occupy a width space of one sub-chamber. Certainly, an arrangement manner of the at least two sub-chambers is not limited to the foregoing manner, and another manner may alternatively be used. For example, in some embodiments, the at least two sub-chambers may alternatively be arranged side by side on the left and right. In some other embodiments, when there are four or more sub-chambers, an array arrangement manner may alternatively be used.

For example, referring to FIG. 1, FIG. 2, FIG. 5, and FIG. 6, the battery box may further include a front horizontal beam 13. The front horizontal beam 13 is located on a front side of the battery box, and is configured to separate the battery 40 from the power distribution chamber 21, specifically, is configured to isolate the battery accommodating chamber from the power distribution chamber 21. For example, the front horizontal beam 13 may be connected between the first side beams 11 and the second side beam 12. In some embodiments, if there is no second side beam 12 but only two first side beams 11, the front horizontal beam 13 may be connected between the two first side beams 11.

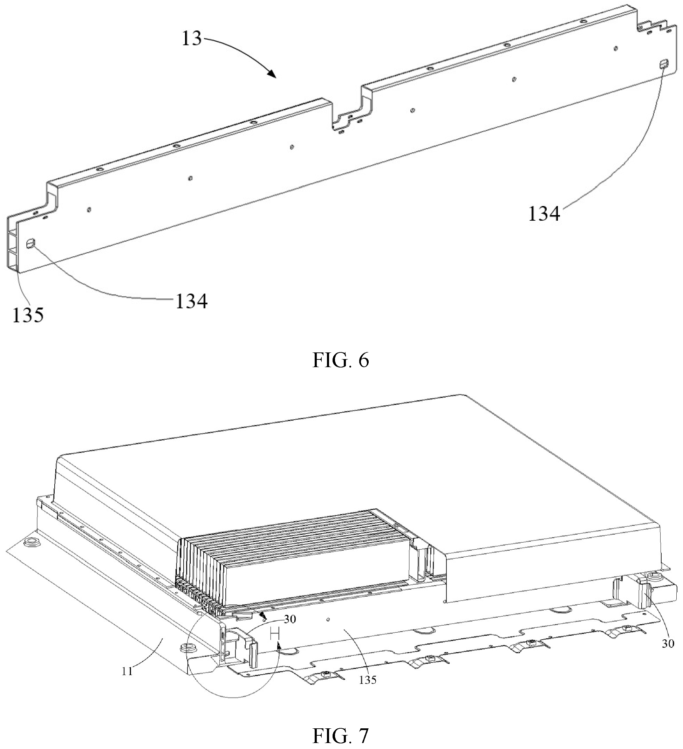

For example, referring to FIG. 5 and FIG. 6, a third chamber 131 may be disposed inside the front horizontal beam 13, and the third chamber 131 may be in communication with one sub-chamber of the second chamber 121 through a second venting hole 132, so that the gas entering from the second communication hole 124 is vented into the third chamber 131 through the second venting hole 132 after flowing into the corresponding sub-chamber, thereby preventing the gas from entering the power distribution chamber 21. The third chamber 131 may be further in communication with another sub-chamber of the second chamber 121 through a third venting hole 133, so that the gas entering from the third communication hole 125 is vented into the third chamber 131 through the third venting hole 133 after flowing into the corresponding sub-chamber, thereby preventing the gas from entering the power distribution chamber 21.

For example, when there is the second side beam 12, referring to FIG. 5 and FIG. 6, a fourth venting hole 134 may be disposed on the front horizontal beam 13, so that the third chamber 131 is in communication with an outer side of the front horizontal beam 13, and the fourth venting hole 134 is in communication with the venting space. Specifically, the fourth venting hole 134 is further located in the venting space enclosed by the baffle plate 30 and the inner wall of the battery box, so that the gas in the third chamber 131 is vented outward through the fourth venting hole 134, and the gas can be further prevented from entering another position of the power distribution chamber 21. Certainly, in some embodiments, if the foregoing second side beam 12 is not provided, the foregoing structure does not need to be disposed on the front horizontal beam 13, and only one plate structure needs to be used as the front horizontal beam 13. For example, when the front horizontal beam 13 is connected between the two first side beams 11, and no second side beam 12 is disposed between the two first side beams 11, a solid plate structure may be used as the front horizontal beam 13.

In some embodiments, referring to FIG. 4, FIG. 5, and FIG. 6, when there is the second side beam 12, the third chamber 131 inside the front horizontal beam 13 may include at least two sub-chambers, and the at least two sub-chambers are stacked at an interval in a height direction. There is a sub-chamber in communication with one sub-chamber in the second side beam 12 through the second venting hole 132, and there is another different sub-chamber in communication with one sub-chamber in the second side beam 12 through the third venting hole 133, so that one sub-chamber in the second side beam 12 corresponds to one sub-chamber in the front horizontal beam. The second venting hole 132 and the third venting hole 133 may be disposed in a plurality of manners. For example, the second venting hole 132 and the third venting hole 133 are disposed on a chamber wall on a side that is of the third chamber 131 and that faces the battery 40, where the second venting hole 132 is opposite to one sub-chamber in the second side beam 12 and the third venting hole 133 is opposite to another sub-chamber in the second side beam 12, so that one sub-chamber in the third chamber 131 is in communication with one sub-chamber in the second chamber 121 through a corresponding venting hole. It should be understood that the foregoing merely exemplarily shows a communication manner between the second chamber 121 and the third chamber 131, and another disposition manner may alternatively be used. That is, the second venting hole 132 and the third venting hole 133 may alternatively be disposed in another manner other than the foregoing manner.

For example, referring to FIG. 3, FIG. 7, and FIG. 8, regardless of whether the second side beam 12 is disposed, the first venting hole 114 on the first side beam 11 may be disposed on the first chamber wall 112, and faces the power distribution chamber 21, that is, the first venting hole 114 is disposed in the power distribution chamber 21.

For example, when there is the second side beam 12, referring to FIG. 5 and FIG. 6, a fourth chamber wall 135 of the third chamber 131 may be formed on a side that is of the front horizontal beam 13 and that faces the power distribution chamber 21, and the fourth venting hole 134 runs through the fourth chamber wall 135 in a thickness direction, that is, the fourth venting hole 134 faces the power distribution chamber 21, so that the baffle plate 30 can be disposed in the power distribution chamber 21, thereby preventing an accommodating space of the battery 40 from being occupied.

When the baffle plate 30 is disposed, any structure that can shield the venting opening 20 and the venting hole and that can enclose the venting space together with the inner wall of the battery box may be used. That is, a structure that can separate the venting opening 20 and the venting hole from another structure in the battery pack falls within a disposition scope of the baffle plate 30 in the embodiments of this application. The following exemplarily describes a disposition manner of the baffle plate 30.

For example, referring to FIG. 7, FIG. 8, FIG. 9, and FIG. 10, the baffle plate 30 may include a first plate 31 and a second plate 32 connected to the first plate 31. The first plate 31 is connected to the front horizontal beam 13 and the bottom plate 10 of the battery box, and is disposed opposite to the first side beam 11. In addition, the first venting hole 114 and the venting opening 20 are located on a same side of the first plate 31, that is, both the first venting hole 114 and the venting opening 20 are located in a venting space between the first plate 31 and the first side beam 11. In some embodiments, if the second side beam 12 and the foregoing front horizontal beam 13 are disposed, and the foregoing fourth venting hole 134 is disposed on the front horizontal beam 13, the venting opening, the fourth venting hole 134, and the first venting hole 114 may be all located on a same side of the first plate 31.

For example, referring to FIG. 7, FIG. 8, FIG. 9, and FIG. 10, the second plate 32 may be connected to the first side beam 11 and the front horizontal beam 13, and disposed opposite to the bottom plate 10. Both the first venting hole 114 and the venting opening 20 are located between the second plate 32 and the bottom plate, that is, both the first venting hole 114 and the venting opening 20 are located in a venting space between the second plate 32 and the bottom plate 10. The venting opening 20 and the first venting hole 114 are disposed in a same space enclosed by the first side beam 11 and a chamber wall of the power distribution chamber 21, to prevent interference to another structure in the power distribution chamber 21. In some embodiments, if the second side beam 12 and the foregoing front horizontal beam 13 are disposed, and the foregoing fourth venting hole 134 is disposed on the front horizontal beam 13, the first venting hole 114, the fourth venting hole 134, and the venting opening 20 may be all located between the second plate 32 and the bottom plate 10, so that the venting opening 20, the first venting hole 114, and the fourth venting hole 134 are disposed in the same space enclosed by the first side beam 11 and the chamber wall of the power distribution chamber 21, to prevent interference to another structure in the power distribution chamber 21.

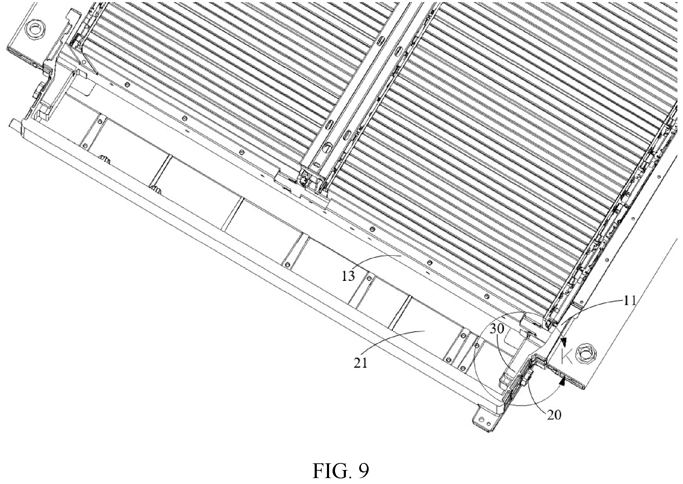

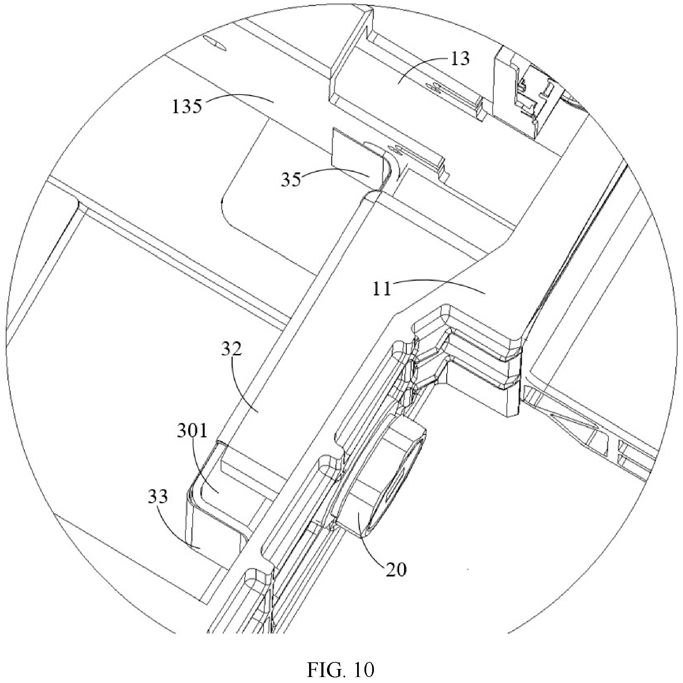

In some embodiments, referring to FIG. 9 and FIG. 10, the venting opening 20 may be opposite to the first plate 31 on the baffle plate 30, and the first plate 31 is a plate opposite to the first side beam 11 and a side wall of the power distribution chamber 21. In some embodiments, the venting opening 20 may alternatively be disposed on the bottom plate 10 of the power distribution chamber 21 of the battery box.

In some other embodiments, referring to FIG. 9 and FIG. 10, the venting opening 20 may be disposed on the first side beam 11, and is not in communication with the first chamber 111 in the first side beam 11, so that a spacing between the venting opening 20 and the first venting hole 114 is shortened, a space enclosed by the baffle plate 30 is reduced, and an occupied space in the battery pack is reduced. It should be understood that the foregoing merely exemplarily shows a manner of disposing the venting opening 20, and another manner may alternatively be used.

For example, the venting opening 20 may alternatively be disposed on the front side of the power distribution chamber 21. The first plate 31 is connected to the first side beam 11 and the bottom plate 10 of the battery box. The second plate 32 is connected to the first side beam 11 and disposed opposite to the bottom plate 10, and the first plate 31, the second plate 32, and the inner wall of the battery box enclose the venting space. For example, left and right sides of the first plate 31 may be respectively connected to the first side beam 11 and an inner wall on the front side of the power distribution chamber 21, and upper and lower sides of the first plate 31 are separately connected between the second plate 32 and the bottom plate 10 of the battery box. A shape of the second plate 32 is a right triangle, where two legs are respectively connected to the first side beam 11 and the inner wall on the front side of the power distribution chamber 21, and a hypotenuse is connected to an upper side of the first plate 31, to enclose, together with a corner on the front side of the power distribution chamber 21, a venting space whose cross section is a right triangle.

For example, referring to FIG. 9 and FIG. 10, a battery explosion-proof valve 41 may be disposed at the venting opening 20, to protect an internal structure of the battery pack. In addition, when there is too much gas in the battery pack, the gas may be vented out of the battery pack through the battery explosion-proof valve 41, to prevent the battery pack from exploding.

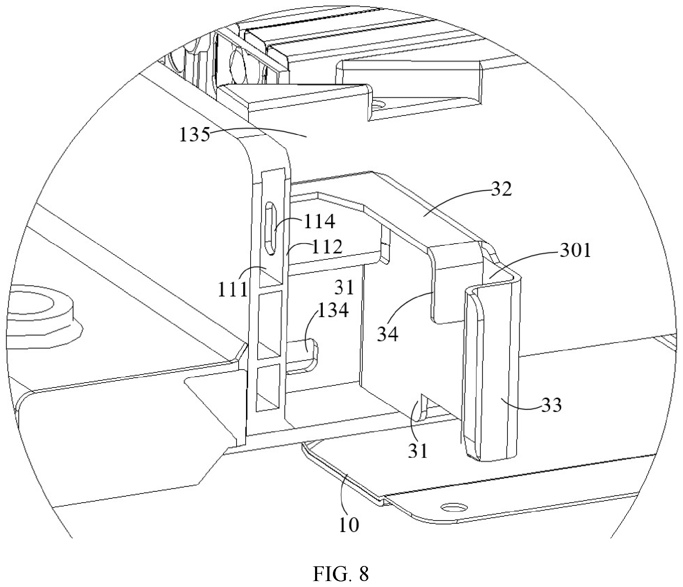

For example, when the venting opening 20 is located on the first side beam 11, referring to FIG. 8 and FIG. 10, the baffle plate 30 may further include a third plate 33 opposite to the front horizontal beam 13 and connected between the bottom plate 10 and the second plate 32, and the third plate 33 is further connected between the first side beam 11 and the first plate 31, to enclose the venting space together with the first plate 31, the second plate 32, and the inner wall of the battery box. The venting opening 20 can be separated from a space on the front side of the power distribution chamber 21 by using the third plate 33, to prevent the gas at the venting opening 20 from flowing to the front side of the power distribution chamber 21.

For example, referring to FIG. 8 and FIG. 10, a gas inlet 301 may be disposed on the baffle plate 30. The gas inlet 301 is opposite to the bottom plate 10 of the battery box, that is, the gas inlet 301 is disposed on the upper side of the baffle plate 30, so that the gas jetted from the battery 40 below a cold plate 50 flows, through the power distribution chamber 21 and the gas inlet 301 of the baffle plate 30, into the venting space enclosed by the baffle plate 30 and the battery box. For example, in some embodiments, a dedicated guide structure may be disposed in the power distribution chamber 21 to guide, to the gas inlet 301, the gas vented from the battery 40 on the upper layer. A shape of the gas inlet 301 may be of any type such as but not limited to a circle, an ellipse, or a rectangle.

In some embodiments, referring to FIG. 8, a gas inlet 301 may be disposed on the second plate 32. For example, the gas inlet 301 may be a notch disposed on the second plate 32, so that the gas jetted from the battery 40 below a cold plate 50 can be conveniently vented from the venting opening 20. Certainly, in another embodiment, the gas inlet 301 may alternatively be disposed on the first plate 31.

In some embodiments, referring to FIG. 8, a gas inlet channel may be disposed at the gas inlet 301, and the gas inlet channel is located in the venting space. That is, a dedicated gas inlet channel is disposed in the venting space to guide, to a position closer to the venting opening 20, the gas flowing from the gas inlet 301, and prevent the gas vented from the first venting hole 114 or the fourth venting hole 134 from jetting to the gas inlet 301, so that the gas directly flows out of the baffle plate 30 through the gas inlet 301.

The gas inlet channel may be disposed in a plurality of manners. For example, referring to FIG. 8, a fourth plate 34 may be disposed at the gas inlet 301 of the second plate 32 and at a position opposite to the third plate 33, and the fourth plate 34 is spaced from the third plate 33. Left and right sides of the fourth plate 34 are separately connected between the first plate 31 and the first side beam 11, or left and right sides of the fourth plate 34 are separately connected between the first plate 31 and the inner wall on the front side of the power distribution chamber 21. In addition, the second plate 32 is spaced from the bottom plate 10 of the battery box to form the gas inlet channel. One end of the gas inlet channel is close to the venting opening 20, and the other end is connected to the gas inlet 301.

The baffle plate 30 may be fastened in a plurality of manners. Referring to FIG. 10, for example, the baffle plate 30 may further include a fifth plate 35 connected to the first plate 31, and the fifth plate 35 is connected to the front horizontal beam 13, to increase a connection area between the baffle plate 30 and the front horizontal beam 13, thereby improving fastness of the baffle plate 30.

Certainly, referring to FIG. 1, the battery box may further include a rear horizontal beam 14, and the rear horizontal beam 14 may be connected between the two first side beams 11. When the second side beam 12 is disposed between the two first side beams 11, the rear horizontal beam 14 may alternatively be connected between the first side beams 11 and the second side beam 12. That is, the rear horizontal beam 14 serves as a plate structure opposite to the front horizontal beam 13 in a front-rear direction, so that the horizontal beams and the side beams enclose the space accommodating the battery 40.

For example, referring to FIG. 1, the battery box may further include a cold plate 50, and the cold plate 50 is fastened to the first side beam 11. When there are two first side beams 11, the cold plate 50 may be fastened to the two first side beams 11 in a manner such as but not limited to screw connection and engagement. When the second side beam 12 is disposed between the two first side beams 11, the cold plate 50 may be fastened to the first side beams 11 and the second side beam 12, and is located on an upper end surface of the second side beam 12. When there is the front horizontal beam 13, the cold plate 50 may be further fastened to the first side beams 11, the second side beam 12, and the front horizontal beam 13 to enclose two sealed spaces to respectively accommodate the batteries 40. For example, referring to FIG. 1, the cold plate 50 may be further fastened to the rear horizontal beam 14, to improve reliability of connection of the cold plate 50. The cold plate 50 may be fastened to the first side beams 11, the second side beam 12, the front horizontal beam 13, and the rear horizontal beam 14 by using a connection plate, thereby improving connection fastness. The connection plate may be a bent plate. One plate on the bent plate is connected to the cold plate 50 by using screws, and another plate is connected to the side beams or the horizontal beams by using screws.

In the foregoing implementations, the first chamber 111 is disposed inside the first side beam 11, the first chamber wall 112 of the first chamber 111 has the first communication hole 113 running through the first chamber wall 112 in the thickness direction, and the first venting hole 114 is further disposed on the first side beam 11, so that the first chamber 111 is in communication with the outer side of the first side beam 11. In addition, the venting opening 20 is disposed on the battery box, the baffle plate 30 is disposed at the venting opening 20, the baffle plate 30 is disposed on the venting opening 20 and encloses the venting space together with the inner wall of the battery box, and the first venting hole 114 and the venting opening 20 are separately in communication with the venting space, so that the gas generated by the cell can be directly vented into the first chamber 111 and vented outward through the first chamber 111. In addition, the baffle plate 30 is disposed to prevent the gas vented from the first chamber 111 from jetting into the power distribution chamber 21, thereby improving a gas recovery effect, and reducing thermal runaway and thermal safety risks of the battery pack.

In addition, an embodiment of this application further provides a battery pack. Referring to FIG. 1 to FIG. 10, the battery pack includes any battery box mentioned above and a battery 40 accommodated in the battery box. The battery 40 may be born on the bottom plate 10 of the battery box, and is located between the two first side beams 11.

For example, referring to FIG. 1, the battery may have a battery explosion-proof valve 41, and the battery explosion-proof valve 41 may be disposed on at least one end of two ends of the battery in a length direction. The battery explosion-proof valve 41 is disposed on an end that is of the battery and that faces the first side beam 11, and a gas jetted from the battery explosion-proof valve 41 may flow from the first communication hole 113 of the first side beam 11 into the first chamber 111 of the first side beam 11, so that the gas is vented out of the battery box through the first chamber 111, the first venting hole 114, and the venting opening 20. For example, the battery explosion-proof valve 41 may be further disposed on a side that is of the battery and that faces the second side beam 12. A gas jetted from the battery explosion-proof valve 41 may flow from the second communication hole 124 or the third communication hole 125 of the second side beam 12 into the second chamber 121 in the second side beam 12, and then the gas is vented out of the battery box through the third chamber 131 and the fourth venting hole 134 of the front horizontal beam 13 and the venting opening 20.

In addition, this application provides a vehicle. Referring to FIG. 1 to FIG. 10, the vehicle includes a vehicle body and any battery pack mentioned above that is disposed on the vehicle body. The vehicle may be specifically, for example but not limited to, a passenger car, a van, or an engineering vehicle. The vehicle body includes structures such as a chassis, wheels, a transmission, and a steering wheel, and any battery pack mentioned above is disposed on the vehicle body.

This application is described in the foregoing embodiments. However, it should be understood that the foregoing embodiments are merely used for example and description purposes, and are not intended to limit this application to the scope of the described embodiments. In addition, a person skilled in the art may understand that this application is not limited to the foregoing embodiments, and further variations and modifications may be made according to the teachings of this application. These variations and modifications all fall within the protection scope of this application. The protection scope of this application is defined by the appended claims and equivalent scope thereof.

## Claims

1. A battery box, configured to accommodate a battery (40), and comprising:
a first side beam (11), wherein a first chamber (111) is disposed inside the first side beam, a side that is of the first side beam and that faces an inner side of the battery box forms a first chamber wall (112) of the first chamber, the first chamber wall has a first communication hole (113) running through the first chamber wall in a thickness direction, and a first venting hole (114) is further disposed on the first side beam, so that the first chamber is in communication with an outer side of the first side beam; and
a baffle plate (30), disposed at a venting opening (20) of the battery box, and enclosing a venting space together with an inner wall of the battery box, wherein the first venting hole and the venting opening are separately in communication with the venting space.

2. The battery box according to claim 1, wherein the battery box comprises two first side beams spaced apart, and the battery is configured to be accommodated between the two first side beams.

3. The battery box according to claim 2, further comprising:
a second side beam (12), disposed between the two first side beams, and configured to define two battery accommodating chambers.

4. The battery box according to claim 3, wherein a second chamber (121) is disposed inside the second side beam, two sides that are of the second side beam and that respectively face the two first side beams respectively form a second chamber wall (122) and a third chamber wall (123) of the second chamber, the second chamber wall has a second communication hole (124) running through the second chamber wall in a thickness direction, and the third chamber wall has a third communication hole (125) running through the third chamber wall in a thickness direction; and
the battery box further comprises a front horizontal beam (13) connected between the first side beams and the second side beam, a third chamber (131) is disposed inside the front horizontal beam, the third chamber is in communication with one sub-chamber of the second chamber through a second venting hole (132), the third chamber is further in communication with another sub-chamber of the second chamber through a third venting hole (133), and a fourth venting hole (134) is further disposed on the front horizontal beam, so that the third chamber is in communication with an outer side of the front horizontal beam, and the fourth venting hole is in communication with the venting space.

5. The battery box according to claim 4, wherein the second chamber comprises at least two sub-chambers, and the second communication hole and the third communication hole are respectively in communication with different sub-chambers in the at least two sub-chambers.

6. The battery box according to claim 5, wherein the at least two sub-chambers are arranged in a height direction.

7. The battery box according to any one of claims 4 to 6, wherein the front horizontal beam is configured to isolate a battery accommodating chamber from a power distribution chamber (21);
the first venting hole is disposed on the first chamber wall and faces the power distribution chamber; and
a side that is of the front horizontal beam and that faces the power distribution chamber forms a fourth chamber wall (135) of the third chamber, and the fourth venting hole runs through the fourth chamber wall in a thickness direction.

8. The battery box according to claim 7, wherein the baffle plate comprises a first plate (31) and a second plate (32) connected to the first plate;
the first plate is connected to the fourth chamber wall and a bottom plate of the battery box, and is disposed opposite to the first side beam, and the fourth venting hole, the first venting hole, and the venting opening are located on a same side of the first plate; and
the second plate is connected to the first side beam and the fourth chamber wall, and is disposed opposite to the bottom plate, and the first venting hole, the fourth venting hole, and the venting opening are all located between the second plate and the bottom plate.

9. The battery box according to claim 2 or 3, further comprising a front horizontal beam, connected between the two first side beams, and configured to isolate a battery accommodating chamber from a power distribution chamber; and
the first venting hole is disposed on the first chamber wall and faces the power distribution chamber.

10. The battery box according to claim 9, wherein the baffle plate comprises a first plate and a second plate connected to the first plate;
the first plate is connected to the front horizontal beam and a bottom plate of the battery box, and is disposed opposite to the first side beam, and the first venting hole and the venting opening are located on a same side of the first plate; and
the second plate is connected to the first side beam and the front horizontal beam, and is disposed opposite to the bottom plate, and the first venting hole and the venting opening are both located between the second plate and the bottom plate.

11. The battery box according to any one of claims 8 to 10, wherein the venting opening is disposed on the first side beam, and is not in communication with the first chamber in the first side beam.

12. The battery box according to claim 11, wherein the baffle plate further comprises a third plate (33), opposite to the front horizontal beam and connected between the bottom plate and the second plate; and
the third plate is further connected between the first side beam and the first plate, to enclose the venting space together with the first plate, the second plate, and the inner wall of the battery box.

13. The battery box according to any one of claims 1 to 7, wherein the baffle plate comprises a first plate and a second plate connected to the first plate; and
the first plate is connected to the first side beam and a bottom plate of the battery box, the second plate is connected to the first side beam and is disposed opposite to the bottom plate, and the first plate, the second plate, and the inner wall of the battery box enclose the venting space.

14. The battery box according to claim 13, wherein the venting opening is opposite to the first plate.

15. The battery box according to any one of claims 1 to 14, wherein a gas inlet (301) is disposed at a position that is on the baffle plate and that is opposite to the bottom plate of the battery box.

16. The battery box according to claim 15, wherein a gas inlet channel is disposed at the gas inlet, and the gas inlet channel is located in the venting space.

17. The battery box according to claim 15 or 16, wherein the gas inlet is disposed on the second plate.

18. The battery box according to any one of claims 1 to 17, wherein a battery explosion-proof valve (41) is disposed at the venting opening.

19. The battery box according to any one of claims 1 to 18, further comprising a cold plate (50), fastened to the first side beam and disposed opposite to the bottom plate of the battery box.

20. A battery pack, comprising:
the battery box according to any one of claims 1 to 19; and
a battery accommodated in the battery box.

21. The battery pack according to claim 20, wherein the battery has a battery explosion-proof valve facing the first side beam.

22. A vehicle, comprising:
a vehicle body; and
the battery pack according to any one of claims 20 to 21 that is disposed on the vehicle body.
